# EUROPÄISCHE PATENTANMELDUNG

(11) **EP 4 800 350 A1**
(43) Veröffentlichungstag der Anmeldung: **02.09.2026**
(21) Anmeldenummer: 26153288.1
(22) Anmeldetag: 21.01.2026
(51) Int. Cl.: G01B 11/25, B02C 4/28, B02C 4/02

(54) **VERFAHREN UND VORRICHTUNG ZUR ÜBERWACHUNG EINER WALZE FÜR EINE WALZENPRESSE SOWIE WALZENPRESSENANLAGE**

(30) Priorität: 26.02.2025 DE 102025107221
(71) Anmelder: Maschinenfabrik Köppern GmbH & Co. KG, 45525 Hattingen (DE)
(72) Erfinder: de Weldige, Eggert, 42555 Velbert Langenberg (DE); Buchmeier, Max, 42109 Wuppertal (DE); Ortmanns, Julius, 44879 Bochum (DE)
(74) Vertreter: Andrejewski - Honke Patent- und Rechtsanwälte Partnerschaft mbB

(57) **Zusammenfassung**

Die Erfindung betrifft ein Verfahren zur Überwachung einer dreidimensionalen Struktur einer Oberfläche (1) einer Walze (2) für eine Walzenpresse (3) zum Zerkleinern, Brikettieren oder Kompaktieren, mit einer Überwachungseinrichtung (4), die die Oberflächenstruktur (1) der Walze (2) durch Abstandsmessungen bestimmt.

Das Verfahren ist dadurch gekennzeichnet, dass während der Abstandsmessungen mindestens ein dreidimensionales Referenzmittel (5) innerhalb der Arbeitsbreite (b) der Walze (2) auf der Oberfläche der Walze angebracht ist.

## Beschreibung

Die Erfindung betrifft ein Verfahren zur Überwachung einer dreidimensionalen Struktur einer Oberfläche einer Walze für eine Walzenpresse, z.B. eine Hochdruckwalzenpresse, zum Zerkleinern, Brikettieren oder Kompaktieren von Material, mit einer Überwachungseinrichtung, die die Oberflächenstruktur der Walze (dreidimensional) durch Abstandsmessungen bestimmt.

Außerdem betrifft die Erfindung eine Vorrichtung zur Überwachung einer dreidimensionalen Struktur einer Oberfläche einer Walze für eine Walzenpresse, mit der ein solches Verfahren durchführt wird bzw. durchführbar ist, sowie eine Walzenpressanlage mit einer Walzenpresse, deren Walze bzw. Walzen mit einem solchen Verfahren überwacht werden.

Eine Walzenpresse, z.B. eine Hochdruckwalzenpresse, für die Zerkleinerung von Material wird auch als Gutbettwalzenmühle bezeichnet. Bei Gutbettwalzenmühlen werden die einzelnen Partikel des Aufgabegutes nicht wie bei einem Brecher zwischen den Oberflächen der beiden Walzen gebrochen, sondern sie werden in einem Gutbett bzw. Materialbett unter hohem Druck verpresst und damit hoch effizient zerkleinert. Bei dem Material handelt es sich insbesondere um stark abrasives Material, zum Beispiel Erz, Zementklinker, Schlacke oder Keramikgrundstoffe.

Die Walzenpresse kann auch für die Kompaktierung oder Brikettierung von Material, z.B. zur Kompaktierung von Düngemittel bestimmt sein. In einer Kompaktierpresse wird das Material in dem Walzenspalt zwischen Walzen mit strukturierter Oberfläche mit hohem Druck zu einem kontinuierlichen Materialstrang verdichtet, der als Schülpe bezeichnet wird. In einer Brikettierpresse wird das Material in dem Walzenspalt durch die auf den Walzenoberflächen angeordneten Brikettierwerkzeuge (mit Brikettmulden zu Briketts oder einem Brikettstrang aus einer Vielzahl von Briketts) verdichtet. Die Brikettierung erfolgt z.B. auch für die Erzeugung von Briketts aus direkt reduziertem Eisen (DRI) bzw. zur Herstellung von Hot Briquetted Iron (HBI)

Die Walzenpresse weist zwei (gegenläufig) rotierend angetriebene Walzen, die sogenannten Presswalzen oder Arbeitswalzen auf, zwischen denen ein Walzenspalt gebildet ist. Die Spaltweite des Walzenspaltes ist während des Betriebes der Presse veränderlich. Dazu kann eine der Presswalzen als Festwalze und die andere als Loswalze ausgebildet sein, wobei die Loswalze über Krafterzeugungsmittel gegen die Festwalze anstellbar ist. Der Außendurchmesser der Walzen nimmt durch Verschleiß während des Produktionsbetriebes ab.

Die Presswalzen können z.B. jeweils einen Walzenkern und eine auf dem Walzenkern angeordnete Bandage aufweisen, deren Außendurchmesser während des Betriebes durch Verschleiß abnimmt. Bei einer solchen Ausführungsform werden die Walzenoberflächen, die dem Verschleiß unterliegen, folglich von den Bandagen gebildet. In die Oberfläche können Verschleißschutzelemente eingearbeitet sein. Die Verschleißschutzelemente können für eine Zerkleinerungswalze stiftförmig als sogenannte Studs oder plattenförmig als sogenannte Fliesen ausgebildet sein. Außerdem kann die Walze über spezielle Randschutzelemente verfügen.

Insgesamt können die Walzen der Walzenpresse unterschiedliche Oberflächenstrukturen aufweisen. Dazu zählen neben den Brikettmulden einer Brikettierwalze auch unterschiedliche Kompaktierstrukturen einer Kompaktierwalze. Außerdem werden Zerkleinerungswalzen erfasst, die spezielle Verschleißschichten mit Verschleißschutzelementen, wie stiftförmige oder plattenförmige Elemente, aufweisen. All diese unterschiedlichen dreidimensionalen Oberflächenstrukturen einer Walze für eine Walzenpresse sind von der vorliegenden Erfindung umfasst.

Aus der Praxis ist es bekannt, den Zustand der Oberflächen der Walzen einer Walzenpresse zu überwachen, um den Verschleißzustand zu überprüfen und daraus entsprechende Maßnahmen abzuleiten, um den reibungslosen Betrieb der Presse sicherzustellen und Störungen oder Betriebsunterbrechungen zu vermeiden. Bei einer Zerkleinerungswalze ist es wichtig, das Vorhandensein und den Zustand der Verschleißschutzelemente, bei einer Brikettierwalze den Zustand der entsprechenden Brikettmulden sowie bei einer Kompaktierwalze den Zustand der Kompaktierstrukturen zu überwachen.

Aus der WO 2022/023869 A1 ist eine Verschleißerfassungsvorrichtung zum Erfassen des Verschleißes einer Walze bekannt. Diese weist einen Abtastsensor auf, der mit einer Steuerung verbunden ist und einen Abschnitt der Oberfläche abtastet, um einen möglichen Verschleiß oder das vollständige Fehlen von Verschleißelementen der Walzenoberfläche zu bestimmen. Außerdem weist die Vorrichtung einen zusätzlichen Ausrichtungssensor auf, der dazu dient, eine Referenzmarkierung auf der Walze zu erfassen, um die relative Position des Abtastsensors zu der Walze zu bestimmen. Diese Referenzmarkierung ist als Vertiefung oder als Vorsprung auf der Oberfläche der Walze ausgebildet.

Ferner kennt man aus der WO 2014/068453 A1 eine Vorrichtung zur Überwachung der Oberfläche einer Walze eines Walzenbrechers, bei der ein Lichtsensor derart angeordnet ist, dass er eine Linie auf die Oberfläche der Walze projiziert. Eine zusätzliche Bilderfassungsvorrichtung erfasst ein Bild eines Abschnitts dieser Oberfläche, der auch einen Teil der projizierten Linie enthält. Mithilfe einer Prozessoreinheit wird das erfasste Bild verarbeitet, um Informationen über die Oberfläche der Walze zu erhalten. Außerdem wird eine Vielzahl an Bildern an verschiedenen Drehpositionen der Walze aufgenommen, um möglichst die gesamte Walze darstellen zu können.

Weiterhin beschreibt die WO 2008/090016 A1 eine Walzenmühle mit zwei gegenläufig angetriebenen Malwalzen, die mit einer Vielzahl von Profilkörpern bestückt sind. Mithilfe einer Überwachungsvorrichtung wird das Vorhandensein bzw. des Nichtvorhandensein dieser Profilkörper festgestellt, um Stillstandzeiten zu verhindern. Dazu wird ein Sensor eingesetzt, der die Walzenmühle während des Mahlbetriebes überprüft und die erfassten Profilkörper zählt. Dieser Sensor kann parallel zur Achse der Mahlwalze verfahren werden.

Auch aus der DE 20 2015 106 156 U1 ist eine Walzenmühle mit zwei rotierenden Walzen bekannt, wobei einer zu messenden Walze eine Sensoreinheit zugeordnet ist, die während des Betriebes der Walzenmühle die Distanz zur Mahlfläche dieser Walze misst, um mittels einer Auswerteeinheit Rückschlüsse auf den Verschleißzustand der Walzen ziehen zu können.

Die WO 2023/104294 A1 beschreibt eine Walzenmaschine zum Zerkleinern oder Verdichten von Aufgabematerial mit mindestens einer Walze, wobei die Walze an der Außenfläche eine Vielzahl von Prallelementen und/oder Kantenschutzelementen aufweist. An dieser Walzenmaschine ist eine Radareinheit vorgesehen, die einen Radarstrahl auf die Außenfläche der Walze aussendet, der an den genannten Elementen reflektiert wird, wodurch der Zustand dieser Elemente überwacht werden kann.

Weiterhin ist aus der DE 10 2022 134 175 A1 eine Vorrichtung zum Messen der Abnutzung einer Walze einer Hochdruckwalzenpresse bekannt. Die Abnutzung wird aus dem Quotienten aus der Oberflächengeschwindigkeit und der Winkelgeschwindigkeit der Walze bestimmt, wobei daraus der Umfang sowie der Durchmesser der Walze berechnet werden können. Dazu wird über die Länge der Walze ein verfahrbarer Sensor zum Messen der Oberflächengeschwindigkeit eingesetzt sowie ein mit einer Welle der Walze zusammenwirkender Winkelgeschwindigkeitsmesser. Bei dem Sensor kann es sich um ein Lasersensor handeln, der nach dem Differenz-Doppler-Verfahren arbeitet und der Winkelgeschwindigkeitsmesser kann als Hall-Effekt-Sensor ausgebildet sein, der über einen Magneten erregt wird.

Schließlich ist aus der DE 21 2021 000 130 U1 eine Vorrichtung zur Erkennung von Defekten auf der Walzenoberfläche einer Walzenpresse bekannt. Diese nutzt einen 3D-Scanner zur Erfassung von dreidimensionalen Punktwolkendaten der Walzenoberfläche. Über die Feststellung der Änderung der Höhenwerte kann auf den Verschleiß der Walze rückgeschlossen werden.

Ausgehend von dem vorbekannten Stand der Technik liegt der Erfindung das technische Problem zugrunde, im Zusammenhang mit (Hochdruck-) Walzenpressen, die für die Zerkleinerung, Kompaktierung oder Brikettierung von Material bestimmt sind, ein Verfahren und eine Vorrichtung zu schaffen, das bzw. die mit einfachen Mitteln eine zuverlässige Überwachung der dreidimensionalen Struktur der Oberfläche einer Walze über die gesamte Breite bzw. die Arbeitsbreite der Walze ermöglicht. Das Verfahren bzw. die Vorrichtung sollen insbesondere flexibel und mit geringem Anlagen- und Installationsaufwand einsetzbar sein

Zur Lösung dieser Aufgabe lehrt die Erfindung bei einem gattungsgemäßen Verfahren zur Überwachung der Oberflächenstruktur einer Walze, dass während der Abstandsmessungen mindestens ein dreidimensionales Referenzmittel innerhalb der Arbeitsbreite der Walze auf der Oberfläche der Walze angebracht ist.

Die Erfindung geht dabei von der Erkenntnis aus, dass sich die Überwachung einer dreidimensionalen Oberflächenstruktur einer Walze einfach mithilfe von Abstandsmessungen durchführen lässt. Davon ausgehend schlägt die Erfindung die Verwendung mindestens eines dreidimensionales Referenzmittels vor, das (z.B. vorübergehend) innerhalb der Arbeitsbreite der Walze auf der Walzenoberfläche angebracht wird und während der Messung innerhalb der Arbeitsbreite mit der Überwachungsvorrichtung ebenfalls vermessen wird. Dieses dreidimensionale Referenzmittel dient während der Abstandsmessungen als Referenz bzw. als Bezugspunkt für die Überwachungsrichtung und vereinfacht und optimiert die Auswertung. Da das Referenzmittel - so wie die Oberflächenstruktur der Walze - selbst auch eine charakteristische dreidimensionale Struktur aufweist, lässt es sich hervorragend mit der(selben) Überwachungseinrichtung erfassen und bei der Auswertung berücksichtigen. Der Einsatz eines solchen Referenzmittels ermöglicht insbesondere eine optimale Normierung bzw. Skalierung der Messdaten bzw. des 3D-Bildatensatzes, z.B. auch bei Verwendung einer mobilen Messanordnung. Zudem kann es das Referenzmittel einerseits ermöglichen, unregelmäßige Oberflächenstrukturen zu überwachen und andererseits auch größere Breiten einer Walze zu vermessen. Darauf wird im weiteren Verlauf der Beschreibung noch näher eingegangen. Besonders vorteilhaft ist zudem, dass das Referenzmittel unmittelbar zusammen mit der gesamten Oberflächenstruktur von der Überwachungseinrichtung, z.B. deren Messeinrichtung, erfasst wird und somit keine zusätzliche Einrichtung notwendig ist, die die bzw. eine Referenzmarkierung erkennt und auswertet.

Es ist besonders vorteilhaft, dass bzw. wenn die dreidimensionale Geometrie des Referenzmittels, d. h. die Geometrie in X-, Y- und Z-Richtung als dreidimensionaler Referenzdatensatz (z.B. in der Überwachungseinrichtung) gespeichert ist. Während der Vermessung der Walzenoberfläche erfolgt nicht nur eine Vermessung der zu untersuchenden Oberflächenstruktur, sondern insbesondere auch eine Vermessung dieses Referenzmittels, sodass mit der Vermessung des Referenzmittels ein sogenannter Skalierungsmessdatensatz erzeugt wird. Im Zuge der Auswertung wird dann der die Oberflächenstruktur der Walze repräsentierende 3D-Bilddatensatz unter Berücksichtigung dieses aufgenommenen Skalierungsmessdatensatzes und unter Berücksichtigung des gespeicherten Referenzdatensatzes skaliert. Der Skalierungsmessdatensatz ist der Datensatz, der bei der tatsächlichen Vermessung des Referenzmittels erzeugt wird, sodass auf Basis des gespeicherten Referenzdatensatzes einerseits und des durch Messung erzeugten Skalierungsmessdatensatzes andererseits die Skalierung erfolgen kann, indem z.B. Skalierungsfaktoren erzeugt werden, mit denen der die Oberflächenstruktur der Walze repräsentierende 3D-Bilddatensatz skaliert wird. Diese Maßnahmen haben den Vorteil, dass es während der Messungen bzw. während der Überwachung der Walzenoberfläche nicht auf eine definierte Positionierung der Überwachungseinrichtung relativ zu der Walzenoberfläche ankommt. Es kommt folglich nicht darauf an, dass die Überwachungseinrichtung bzw. der Abstand und/oder der Winkel von Quelle und Sensor relativ zu der Walze bei jeder Messung gleich sind. Durch Kenntnis der Geometrie des Referenzmittels in jedem Bilddatensatz lassen sich alle Winkel- und Größenverzerrungen, die durch unterschiedliche Ausrichtungen oder Abstände der Messeinrichtung zu der Walze entstehen, herausrechnen, sodass ein maß- und winkeltreues Abbild der gesamten Walzenoberfläche entsteht. Das Referenzmittel dient folglich vor allem der eindeutigen Skalierung und folglich Normierung der Messdaten, die in der Regel durch Messungen mit zeitlichem Abstand in unterschiedlichen Positionen der Quelle und/oder des Sensors durchgeführt werden. Darüber hinaus ermöglicht das Referenzmittel bzw. die Erfassung der bekannten Geometrie des Referenzmittels auch die Vermessung von Walzenoberflächen mit größerer Breite, die zum Beispiel größer als die Messbreite der Überwachungseinrichtung ist. Darauf wird im Folgenden noch eingegangen.

Bei der Überwachungseinrichtung kann es sich um ein bekanntes Messsystem handeln, das geeignet ist, mithilfe von Abstandsmessungen eine dreidimensionale Aufnahme einer strukturierten Oberfläche zu erzeugen. Dabei kann die Überwachungseinrichtung sowohl die Messung durchführen, als auch die aus der Messung gewonnenen Daten (unmittelbar) verarbeiten, auswerten und im Sinne einer Auswerteeinheit den 3D-Bilddatensatz und/oder ein dreidimensionales Bild erstellen. Alternativ kann auch eine separate Auswerteeinheit eingesetzt werden, die mit der Überwachungseinrichtung kommuniziert und die Messwerte weiter verarbeitet. Außerdem kann an die Überwachungseinrichtung und/oder die Auswerteeinheit ein Computer angeschlossen werden oder ein solcher Computer kann Bestandteil der Überwachungseinrichtung sein. Bevorzugt ist folglich zumindest die beschriebene Sensoreinrichtung Bestandteil der an der Walze positionierten Überwachungseinrichtung. Optional kann auch die bzw. eine Auswerteeinheit in die Überwachungseinrichtung integriert sein, wobei der für die Skalierung notwendige Referenzdatensatz z.B. in der (internen) Auswerteeinheit in der Überwachungseinrichtung gespeichert ist. Sofern die Auswerteeinheit nicht Bestandteil der (mobilen) Überwachungseinrichtung ist, sondern als externe Auswerteeinheit z.B. durch einen separaten Rechner realisiert wird, ist der Referenzdatensatz bevorzugt nicht in der Überwachungseinrichtung, sondern in der separaten Auswerteeinheit gespeichert. Dabei kann die Auswerteeinheit durch einen separaten Rechner und folglich separate Hardware realisiert sein.

Die Erfindung umfasst aber auch Ausführungsformen, bei denen die Auswerteeinheit auf einem separaten (externen) Server oder in einer Cloud realisiert ist, sodass dann die Auswerteeinheit als z.B. Auswertealgorithmus oder Job in einer Cloud realisiert ist und z.B. auch der Referenzdatensatz auf einem separaten Server oder in einer Cloud gespeichert ist/sind.

Bevorzugt wird das mindestens eine Referenzmittel lösbar auf der Walze angebracht, z.B. adhäsiv oder magnetisch. Somit kann das Referenzmittel für die Durchführung der Abstandsmessungen mittels der Überwachungseinrichtung auf der Walzenoberfläche reversibel angebracht werden. Bevor z.B. die Walze nach der Überwachung der Oberfläche wieder im Produktionsbetrieb eingesetzt wird, wird das lösbar befestigte Referenzmittel von der Oberfläche der Walze entfernt. Um dies zu ermöglichen, kann das Referenzmittel adhäsiv angebracht werden d. h. es kann geklebt werden, z.B. als haftender Referenzsticker oder mittels eines zusätzlichen Klebers, der beispielweise durch Erwärmung wieder lösbar ist. Alternativ kann das Referenzmittel magnetisch ausgestaltet sein und an der metallischen Walze über eine Magnetverbindung angebracht werden. Alternativ lässt sich das Referenzmittel auch durch Klemmen (z.B. zwischen den Verschleißelementen, z.B. Studs) oder durch Aufstecken (z.B. auf die Verschleißelemente, z.B. Studs) auf der Walzenoberfläche befestigen. Somit ist eine schnelle und flexible Montage bzw. Demontage des Referenzmittels an der Walzenoberfläche möglich. Das ist deshalb von Bedeutung, weil das Referenzmittel bevorzugt nur während des Überwachungsvorgangs an der Walzenoberfläche (nämlich innerhalb der Arbeitsbreite) befestigt wird und während des Pressenbetriebes entfernt wird.

Denn das Verfahren zur Überwachung der Oberflächenstruktur wird bevorzugt nicht während des Produktionsbetriebes bzw. Pressbetriebes der Walze bzw. Presse, sondern während einer Unterbrechung des Betriebes durchgeführt, besonders bevorzugt aber in einem in einer Presse eingebauten Zustand der Walze. Gegenüber dem vorbekannten Stand der Technik hat dies den Vorteil, dass die Durchführung solcher Messungen nicht von den Bedingungen während des laufenden Produktionsbetriebes beeinträchtigt wird. Die Überwachung kann so besonders einfach und mit hoher Genauigkeit erfolgen. Es ist vorteilhaft, wenn während des Wartungsbetriebes oder eines anderweitigen Stillstandes der Produktion gemessen wird. Dennoch kann die Walze überwacht werden, während sie in der Presse eingebaut ist, indem das Referenzmittel auf der Walzenoberfläche angebracht wird und die Überwachungseinrichtung im Bereich der zu vermessenden Walze positioniert wird. Alternativ kann die Walze zur Durchführung der Abstandsmessung auch aus der Presse ausgebaut werden und z.B. in einen speziellen Prüfstand vermessen werden.

In einer bevorzugten Ausführungsform rotiert die Walze während der Überwachung der dreidimensionalen Oberflächenstruktur und das bevorzugt mit gleichbleibender Rotationsgeschwindigkeit. Die Überwachungseinrichtung kann somit - auch mit einem begrenzten Messbereich - über den vollständigen Umfang der Walze Abstandsmessungen durchführen und dadurch die Oberflächenstruktur der gesamten Walze, d. h. über den gesamten Walzenumfang bestimmen. Es bietet sich an, dass die Walze mit gleichbleibender Geschwindigkeit rotiert um etwaige Fehler wie z.B. verzerrte Darstellungen der Oberfläche zu vermeiden. Sofern es sich um gleichmäßige Strukturen auf der Walzenoberfläche handelt, können aber variierende Geschwindigkeiten der Rotation in Kauf genommen werden. Eine sich durch variierende Geschwindigkeiten ergebende ungleichmäßige Abbildung der eigentlich regelmäßigen Struktur kann die Auswerteeinheit in Kenntnis der regelmäßigen Struktur korrigieren. Bei der Vermessung von ungleichmäßigen Oberflächenstrukturen hingegen ist es zur Erzielung einwandfreier Ergebnisse vorteilhaft, dass die Walze bei der Überwachung der Oberflächenstruktur mit gleichbleibender Geschwindigkeit rotiert.

Durch die Abstandsmessungen kann über den Umfang und über zumindest einen Teil der Arbeitsbreite der Walze eine vollständige dreidimensionale Information (als 3D-Bilddatensatz) und optional auch ein dreidimensionales Bild (als grafische Darstellung bzw. Visualisierung) der Oberflächenstruktur der Walze erstellt werden. Die Walzenoberfläche kann teilweise oder vollständig erfasst und z.B. grafisch dargestellt werden. Die aufgenommenen Daten und/oder die Darstellung der Oberfläche in 3D lassen zuverlässige Rückschlüsse auf den Verschleiß der Oberfläche zu. Denn anhand der dreidimensionalen Information und/oder Darstellung sind Unterschiede in der Höhe der Oberfläche und somit Unterschiede im Verschleiß der Walze zu erkennen. Der dreidimensionale Datensatz und/oder das dreidimensionale Bild der Oberfläche werden entweder von der Überwachungseinrichtung (mit integrierter Auswerteeinheit) erzeugt und optional ausgegeben oder von einer separaten Auswerteeinheit, die mit der Überwachungseinrichtung kommuniziert und von dieser die (Roh-)Daten der Abstandsmessungen erhält. Die grafische Darstellung der Oberfläche kann alternativ an einem mit der Überwachungsvorrichtung verbundenen Computer erfolgen.

Bevorzugt weist die Überwachungseinrichtung zumindest eine Sensoreinrichtung auf, wobei die Sensoreinrichtung eine Quelle, z.B. eine Strahlungsquelle, aufweist, die einen Messstrahl erzeugt und wobei die Sensoreinrichtung einen Detektor bzw. Sensor oder Empfänger (Empfangselement) aufweist, der den von der Quelle erzeugten und von der Oberfläche der Walze reflektierten Messstrahl, z.B. Lichtstrahl, detektiert.

Bei dem Messstrahl handelt es bevorzugt um einen auf die Walzenoberfläche projizierten Strahl einer elektromagnetischen Strahlung, z.B. um einen Lichtstrahl, bei dem es sich um sichtbares Licht handeln kann. Alternativ wird aber auch elektromagnetische Strahlung außerhalb des sichtbaren Spektrums, z.B. IR- oder UV-Strahlung erfasst. Die Sensoreinrichtung ist zum Empfang der Messstrahlung, z.B. des Lichtes, eingerichtet. Durch Erfassung der von der Walzenoberfläche reflektierten Strahlen lässt sich der Abstand des jeweils zu vermessenden Punktes auf der Oberfläche bestimmen, z.B. durch Triangulation. Darauf wird noch eingegangen.

In einer besonders bevorzugten Ausführungsform projiziert die Quelle den Messstrahl als eine sich entlang der Walzenbreite orientierte Messlinie auf die Walzenoberfläche, z.B. als Laserlinie, wobei bevorzugt die sich entlang der Walzenbreite (z.B. in einer parallel zur Walzenachse orientierten X-Richtung) erstreckende Länge der Messlinie, z.B. der Laserlinie, die Messbreite der Sensoreinrichtung und/oder der Überwachungseinrichtung definiert. Die Sensoreinrichtung kann folglich als Linienscanner, z.B. Laserlinienscanner ausgebildet sein, der bevorzugt das Laser-Triangulationsprinzip zur Erfassung der Oberflächenprofile auf der Walzenoberfläche nutzt. Dazu kann z.B. eine geeignete Optik, beispielsweise eine Linien-Optik eine Linie, z.B. eine Laserlinie, auf die Walzenoberfläche projizieren. Das (diffus) reflektierte Licht dieser Linie, z.B. Laserlinie, wird auf den Detektor/Sensor der Sensoreinrichtung abgebildet, z.B. über eine geeignete Optik. Dabei kann der Detektor z.B. eine positionsaufgelöste Messung ermöglichen, z.B. als Sensormatrix, sodass die räumliche Position des von der Laserlinie reflektierten Lichtes (in der Breitenrichtung) erfassbar ist. Die Erzeugung und Vermessung einer solchen Messlinie, z.B. Laserlinie, z.B. mit einem Laser-Linienscanner ermöglicht zunächst eine zweidimensionale Erfassung, indem die Abstandsinformation (z.B. als in radialer Richtung orientierte Z-Achse) über eine Breitenpositionen entlang der Messlinie (als X-Achse) erfasst wird. Eine 3D Aufnahme bzw. dreidimensionale Erfassung der Walzenoberfläche erfolgt dann durch die Bewegung der Walzenoberfläche relativ zu der Mess- bzw. Sensoreinrichtung und folglich durch die Rotation der Walze, sodass sich die Walzenoberfläche entlang einer (in der Umfangsrichtung bzw. in tangentialer Richtung orientierten) Y-Achse relativ zu der Messeinrichtung bewegt. Damit wird aus der Aneinanderreihung der über die Linienerfassung (in X-Richtung) ermittelten 2D-Profile eine 3D-Punktewolke gewonnen.

In einer bevorzugten Ausführungsform der Erfindung werden die Abstandsmessungen mittels Triangulation durchgeführt, bevorzugt mittels Lasertriangulation. Bei der Triangulation handelt es sich um eine Abstandsmessung durch Winkelberechnung im Sinne einer Tiefenbilderfassung. Der Messstrahl, z.B. Laserstrahl wird auf das zu messende Objekt, in der vorliegenden Erfindung also auf die Oberfläche der Walze projiziert. Das reflektierte Licht trifft abhängig von der Entfernung zur Oberfläche bzw. dem zu bestimmenden Objekt unter einem bestimmten Winkel auf einen Empfänger. Durch die Position des reflektierten Strahls auf dem Empfänger bzw. Empfangselement und der Distanz zwischen dem Sender und dem Empfangselement wird der Abstand zu dem Messobjekt berechnet. Alternativ zu einem Laser können auch andere Lichtquellen eingesetzt werden, wie z.B. Dioden. Alternativ kann mit einem "LIDAR-System" gearbeitet werden. "LIDAR" steht für "Light Detection and Ranging" oder "Light Emerging, Detection and Ranging".

Es ist besonders vorteilhaft, wenn die Sensoreinrichtung auf die Walzenoberfläche - wie beschrieben - eine (streifenförmige) Messlinie, z.B. Laserlinie mit einer Länge projiziert, die die Messbreite M der Messeinrichtung definiert und die sich entlang der Breite der Walze (d. h. parallel zu ihrer Achse) erstreckt. Dies ermöglicht es, dass die Walzenoberfläche (in einem Messvorgang und damit einem Bilddatensatz) über eine bestimmte Messbreite vermessen wird. Über die Positionierung der Überwachungseinrichtung wird die Vermessung des bestimmten Messbereiches mit der Messbreite M ermöglicht.

Die Überwachungsvorrichtung bzw. deren Sensoreinrichtung kann eine Messbreite M aufweisen, die geringer als die Arbeitsbreite b der Walze ist, wobei zur Erfassung der gesamten Arbeitsbreite der Walze (nacheinander) mehrere Abstandsmessungen über jeweils den Umfang nacheinander an verschiedenen Breitenpositionen der Walze durchgeführt werden, die das mindestens eine Referenzmittel erfassen. Somit kann die Messbreite der Überwachungsvorrichtung kleiner als die Arbeitsbreite der Walze sein. In der Praxis sind die Walzen und insbesondere auch der Verschleißbereich bzw. die Arbeitsbreite oft breiter als der Messbereich gängiger Messsysteme und somit der Überwachungsvorrichtung, die lediglich einen bestimmten Breitenbereich der Walze mit einer vorgegebene Positionierung des Messsystems abdecken kann. Zur Erfassung und Überwachung der gesamten Arbeitsbreite der Walze können mehrere Abstandsmessungen über die Arbeitsbreite der Walze durchgeführt werden, wobei die Überwachungsvorrichtung dabei nicht traversiert, sondern während jeder Aufnahme ortsfest ist. Die Überwachungsvorrichtung kann demnach nacheinander mehrere Abstandsmessungen der beschriebenen Art an unterschiedlichen Positionen entlang der Arbeitsbreite durchführen. Das sich jeweils auf der Oberfläche der Walze befindende Referenzmittel wird zur Orientierung und Bestimmung der Position der jeweiligen Messungen von der Überwachungsvorrichtung erfasst. Das erfindungsgemäße dreidimensionale Referenzmittel hat folglich dann besondere Bedeutung, wenn Walzenoberflächen mit einer Arbeitsbreite vermessen werden sollen, die größer als die Messbreite der verwendeten Sensoreinrichtung ist. Über das Referenzmittel lassen sich die nacheinander in verschiedenen Breitenpositionen gewonnenen Messdaten gleichsam zu einem Bild bzw. Datensatz der vollständigen Walzenoberfläche "zusammensetzen". Das erfindungsgemäße Referenzmittel ermöglicht es folglich, auch mit bekannten Messeinrichtungen mit einer begrenzten Messbreite von z.B. 10 cm bis 50 cm, vorzugsweise 20 cm bis 40 cm, Presswalzen mit üblichen Walzenbreiten zu vermessen, die auch (deutlich) breiter sein können als die angegebene Messbreite. Das gelingt mit sehr einfachen Mitteln, indem z.B. die Messeinrichtung als mobile Sensoreinrichtung in unterschiedlichen Positionen positioniert bzw. ausgerichtet wird, ohne dass es dabei auf eine besonders große Genauigkeit der Positionierung der Messeinrichtung ankommt, da über die Referenzmittel auf der Walzenoberfläche eine Normierung bzw. Skalierung der Messdaten in Form von 3D-Bilddatensätzen erfolgt. Denn zur Erfassung größerer Arbeitsbreiten werden erfindungsgemäß nacheinander mehrere 3D-Bilddatensätze erzeugt, wobei sich die mehreren Abstandsmessungen in zumindest einem Überlappungsbereich überlappen, in welchem das Referenzmittel angeordnet ist. Die mehreren über die Arbeitsbreite erzeugten 3D-Bilddatensätze werden unter Berücksichtigung des gespeicherten Referenzdatensatzes und des an dem Referenzmittel aufgenommenen Skalierungsdatensatzes kombiniert und identisch skaliert. Auch dabei ist von Bedeutung, dass die dreidimensionale Struktur des Referenzmittels bekannt und z.B. in der Überwachungseinrichtung als Referenzdatensatz gespeichert ist. Bei der Vermessung werden nicht nur die zu untersuchenden Strukturen der Walzenoberfläche, sondern insbesondere auch das Referenzmittel vermessen und damit ein Skalierungsdatensatz erzeugt, der im Zuge der Auswertung das Zusammensetzen der nacheinander gewonnenen Bilddatensätze und eine identische Skalierung ermöglicht.

Bevorzugt werden folglich zur Erstellung des dreidimensionalen Bildes der Oberflächenstruktur der gesamten Arbeitsbreite der Walze mehrere sich in einem Bereich überlappende Messungen durchgeführt, wobei in diesem Überlappungsbereich das mindestens eine Referenzmittel angebracht ist. Dies dient dazu, dass anschließend zur Auswertung die gesamte Arbeitsbreite der Walze in einer einzigen dreidimensionalen Ansicht dargestellt werden kann. Das Referenzmittel dient hierbei - wie beschrieben - der Orientierung bzw. Normierung/Skalierung der Messdaten. Dadurch, dass bei den überlappenden Aufnahmen bzw. Messungen der Oberfläche das Referenzmittel in dem Überlappungsbereich miterfasst wird, können doppelt vermessene Bereiche herausgerechnet werden, so dass sich der gesamte 3D-Datensatz der Walzenoberfläche und damit das Gesamtbild der Walze ergibt. Das Referenzmittel dient in diesem Fall zusätzlich der Zuordnung mehrerer Messungen bzw. Messbereiche der Oberfläche, um die Aufnahmen der Oberfläche der Walze als ein Gesamtbild bzw. als gesamten Datensatz zusammenzusetzen.

In einer Ausführungsform ist die Überwachungseinrichtung während der Überwachung der dreidimensionalen Oberflächenstruktur stationär befestigt, d. h. sie ist ortsfest montiert. Sie kann zwar mobil ausgebildet sein, wird aber während der Messung/Datenaufnahme nicht bewegt. Gegenüber einer z.B. über eine Schiene traversierenden Messeinrichtung hat die erfindungsgemäße Überwachungseinrichtung den Vorteil, dass sie sich während der Durchführung der Abstandsmessungen nicht innerhalb der (Arbeits-)Breite der Walze bewegt. Dadurch wird die Messgenauigkeit erhöht und der Messvorgang vereinfacht. Die Überwachungsvorrichtung wird folglich während jeder Messung stationär betrieben. Das bedeutet, dass eine ortsfeste Positionierung der Überwachungseinrichtung erfolgt, die während der Durchführung der Abstandsmessungen bei rotierender Walze nicht verändert wird. Lediglich für weitere Abstandsmessungen, z.B. nacheinander über die Arbeitsbreite der Walze, kann die Überwachungseinrichtung versetzt werden.

In einer vorteilhaften Ausgestaltung der Erfindung ist das mindestens eine dreidimensionale Referenzmittel im Querschnitt als stufenförmiges Referenzmittel ausgebildet, zum Beispiel als stufenförmige Pyramide, wobei die Stufen jeweils eine unterschiedliche Höhe und/oder Breite aufweisen können. Die definierte und dem System (d. h. der Auswerteeinheit) bekannte Geometrie des Referenzmittels wird von der Überwachungseinrichtung erfasst, das heißt es werden auch an dem Referenzmittel Abstandsmessungen durchgeführt, die bei der Auswertung berücksichtigt und zur Skalierung/Normierung der Messdaten verwendet werden. Die vorliegende Erfindung ist jedoch nicht auf die beschriebene Geometrie und generell auch nicht nur auf eine symmetrische Geometrie des Referenzmittels beschränkt.

Bevorzugt ist das mindestens eine dreidimensionale Referenzmittel in einer Draufsicht asymmetrisch ausgebildet z.B. mit einem asymmetrisch ausgebildeten Eckbereich. Anhand der Asymmetrie bzw. einem asymmetrischen Bereich - beispielweise in einer Ecke - kann die Ausrichtung der Referenzmittels und damit z.B. Richtung der Rotation der Walze während der Messung zuverlässig bestimmt werden.

Im Rahmen der Erfindung können mehrere dreidimensionale Referenzmittel (der beschriebenen Art) auf der Oberfläche der Walze angeordnet sein und mit einem Abstand zueinander über die Arbeitsbreite b der Walze verteilt sein. Die mehreren Referenzmittel können sich optional in ihrer Geometrie jeweils unterscheiden. Um Walzen mit größerer Arbeitsbreite zu vermessen, die um ein Vielfaches breiter sind als der Messbereich der Überwachungseinrichtung, werden mehrere dreidimensionale Referenzmittel jeweils im Überlappungsbereich der Messungen angeordnet, die neben der Skalierung/Normierung auch der Orientierung und der Zuordnung bei der Auswertung dienen. Damit die einzelnen erfassten Referenzmittel voneinander unterscheidbar sind, weisen sie abweichende Geometrien auf. Das bedeutet, dass bei der beispielsweise stufenförmigen Ausgestaltung als Pyramide, unterschiedliche Referenzmittel jeweils unterschiedliche Breiten, Höhen oder Umrisse in den einzelnen Stufen aufweisen können.

In einer weiteren Ausgestaltung der Erfindung kann zur absoluten Vermessung der Oberfläche, z.B. der absoluten Bestimmung des Verschleißes, zusätzlich mindestens eine zusätzliche Referenzeinrichtung außerhalb der Arbeitsbreite der Walze vorgesehen sein, die z.B. in einem Randbereich auf dem Walzenumfang, an der Walzenstirnseite oder an dem Pressengestell angeordnet ist. Zur Durchführung von Absolutmessungen ist die zusätzliche Referenzeinrichtung in einem Bereich angeordnet, der keinem Verschleiß unterliegt, d. h. dass sie nicht in dem zu untersuchenden Verschleißbereich und folglich nicht innerhalb der Arbeitsbreite der Walze angeordnet ist. Diese Referenzeinrichtung wird dennoch von derselben Überwachungseinrichtung, bevorzugt derselben Sensoreinrichtung erfasst und dient als Absolut-Referenz der Auswertung der Oberflächenstruktur. Die Absolutmessung erfolgt folglich relativ zu der absoluten Referenzeinrichtung durch die Vermessung des einen oder der mehreren dreidimensionalen Referenzmittels du der zugehörigen Abschnitte der Walzenoberfläche innerhalb der Arbeitsbreite der Walze. Die außerhalb des Arbeitsbereiches angeordnete Referenzeinrichtung ist folglich von dem oder den im Arbeitsbereich der Walze (vorübergehend) angeordneten Referenzmitteln zu unterscheiden.

Gegenstand der Erfindung ist nicht nur das beschriebene Verfahren, sondern auch eine Vorrichtung zur Überwachung einer dreidimensionalen Struktur einer Oberfläche einer Walze für eine Walzenpresse zum Zerkleinern, Brikettieren oder Kompaktieren mit einer Überwachungseinrichtung und mindestens einem dreidimensionalen Referenzmittel, wobei das mindestens eine Referenzmittel innerhalb der Arbeitsbreite der Walze auf der Oberfläche der Walze befestigbar ist. Der Kombination aus Überwachungseinrichtung und Referenzmittel kommt folglich besondere Bedeutung zu.

Sämtliche im Zusammenhang mit dem Verfahren genannten bevorzugten Ausführungsformen und Merkmale der Erfindung gelten auch für die erfindungsgemäße Vorrichtung.

Bevorzugt ist die Überwachungseinrichtung mobil bzw. transportabel ausgestaltet. Sie muss folglich nicht integraler Bestandteil der Presse oder Pressenanlage sein, sondern lässt sich zum Zwecke der Messung im Bereich der Presse oder deren Walze positionieren und nach Durchführung der Messung wieder entfernen. Alternativ kann die mobile Überwachungseinrichtung auch an einem separaten Prüfstand, in den die Walze eingebaut wird, für die (Abstands-)Messungen montiert werden. Jedenfalls kann die Überwachungseinrichtung aufgrund der transportablen Ausgestaltung flexibel für die Durchführung der Messungen positioniert werden und ist nicht dauerhaft an der Walzenpresse angebracht, um sie auch beim Betrieb der Presse (währenddessen nicht gemessen wird) vor Beschädigungen zu schützen. Die mobile Ausgestaltung ist vor allem für die Vermessung großer Walzenbreiten mit mehreren Messungen in unterschiedlichen Positionen vorteilhaft.

Die erfindungsgemäße Überwachungseinrichtung und das in diesem Zusammenhang verwendete Referenzmittel sind folglich auch innerhalb der beanspruchten Pressenanlage von besonderer Bedeutung. Zur Ausgestaltung und Funktion der Überwachungseinrichtung und zu den optionalen und bevorzugten Ausführungsformen wird auf die Erläuterungen zu dem beschriebenen Verfahren und der beschriebenen Überwachungsvorrichtung verwiesen.

Die vorliegende Erfindung umfasst auch eine Walzenpressenanlage mit einer Walzenpresse mit zwei in einem Pressengestell drehbar gelagerten Walzen, zwischen denen ein Walzenspalt gebildet ist und mit mindestens einem dreidimensionalen Referenzmittel sowie einer Überwachungseinrichtung zur Überwachung der dreidimensionale Struktur der Oberfläche der Walze, wobei das mindestens eine Referenzmittel innerhalb der Arbeitsbreite einer der Walzen auf der Oberfläche dieser Walze anbringbar ist. Die Überwachungseinrichtung wird folglich besonders bevorzugt in Kombination mit der Walzenpresse unter Schutz gestellt.

Die Merkmale die das Verfahren sowie die Vorrichtung betreffen, gelten auch für die Walzenpressanlage.

In einer bevorzugten Ausführungsform weist die Walze jeweils eine regelmäßige Oberflächenstruktur über die Breite und/oder den Umfang auf. Durch eine regelmäßige, d. h. eine über die Breite und/oder den Umfang wiederkehrende Struktur der Oberfläche wird die Orientierung auf der Walzenoberfläche bzw. das Zusammensetzen einzelner aufgenommener dreidimensionaler Bilder zusätzlich erleichtert. Zum Beispiel bei einer Brikettierpresse, die entsprechende Mulden auf der Oberfläche der Walzen aufweist, ist die Ausbildung und Anordnung dieser Mulden in der Regel gleichmäßig. Auch die Verschleißschutzelemente von Zerkleinerungswalzen können eine regelmäßige Ausbildung und Anordnung auf der Oberfläche der Walze aufweisen.

Die Walze kann als eine Brikettier- oder Kompaktierwalze mit einer muldenförmigen Oberflächenstruktur oder als eine Zerkleinerungswalze mit stiftförmigen oder plattenförmigen Verschleißschutzelementen ausgestaltet sein. Sowohl die Mulden als auch die Verschleißschutzelemente, wie beispielsweise "Studs" beim "Studlining" können mithilfe der Überwachungsvorrichtung vermessen werden. Anhand der durchgeführten Abstandsmessungen kann z.B. der Verschleiß der jeweiligen Oberflächenstruktur der Walze erfasst werden.

Von besonderer Bedeutung ist erfindungsgemäß das beschriebene, zumindest eine dreidimensionale Referenzmittel, welches nicht dem Verschleiß unterliegt und während der Abstandsmessungen (z.B. vorübergehend) innerhalb der Arbeitsbreite der Walze auf der Oberfläche der Walze angebracht wird bzw. angebracht ist, und zwar bevorzugt lösbar. Dieses Referenzmittel wird nicht nur - wie beschrieben - in Kombination mit der Überwachungseinrichtung beansprucht, sondern auch isoliert und alternativ auch in Kombination mit einer Presswalze einer Walzenpresse der beschriebenen Art. Die Erfindung betrifft folglich auch eine Presswalze einer Walzenpresse zum Zerkleinern, Brikettieren oder Kompaktieren von Material, wobei auf der Oberfläche der Presswalze innerhalb der Arbeitsbreite zumindest ein (nicht dem Verschleiß unterliegendes) dreidimensionales Referenzmittel der beschriebenen Art anbringbar ist oder angebracht ist. Die Kombination aus einer grundsätzlich bekannten Presswalze einerseits und dem erfindungsgemäßen Referenzmittel (oder mehreren solcher Referenzmittel) andererseits wird folglich als erfindungsgemäße Presswalze oder Presswalzenaggregat ebenfalls unter Schutz gestellt. Das Referenzmittel selbst kann in der beschriebenen Weise ausgebildet sein. Zur Vermeidung von Wiederholungen wird auf die bevorzugten Ausgestaltungen des Referenzmittels verwiesen, die im Zusammenhang mit dem beanspruchten Verfahren, der beanspruchten Vorrichtung und der beanspruchten Pressenanlage beschrieben sind. Sämtliche beschriebene oder beanspruchte Merkmale des Referenzmittels werden auch isoliert und in der Kombination des Referenzmittels mit bzw. an einer Presswalze beansprucht.

Im Folgenden wird die Erfindung anhand von Zeichnungen näher erläutert, die lediglich Ausführungsbeispiele darstellen. Es zeigen:
- Fig. 1:: Walzenpresse in einer vereinfachten Seitenansicht,
- Fig. 2:: eine Walze bzw. Walzenoberfläche mit der erfindungsgemäßen Vorrichtung zur Überwachung,
- Fig. 3:: eine Ausführungsform eines erfindungsgemäßen Referenzmittels in einer Seitenansicht und
- Fig. 4:: eine dreidimensionale Darstellung der Oberflächenstruktur einer Walze

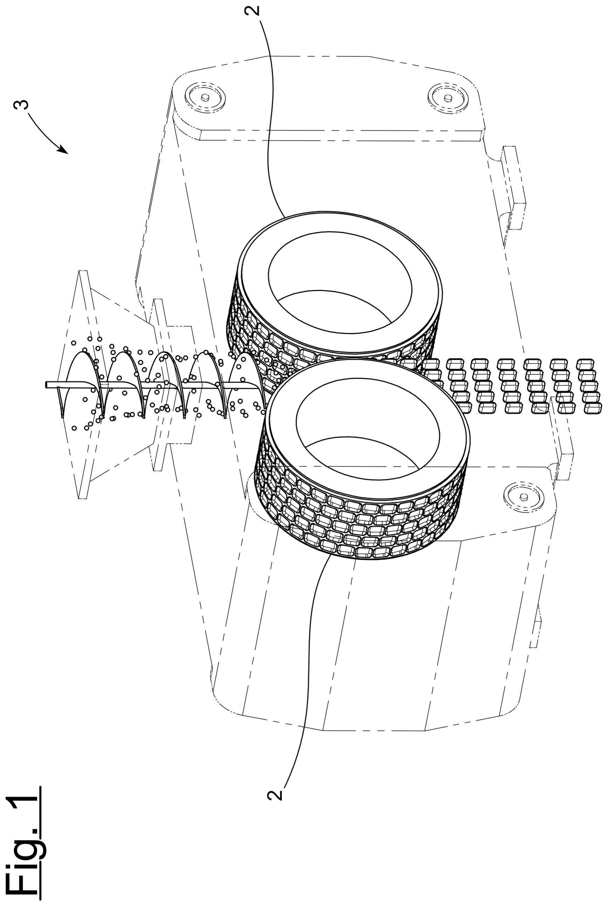

In Fig. 1 ist eine Walzenpresse 3, z.B. eine Hochdruckwalzenpresse, dargestellt, die zwei gegenläufig rotierende (vereinfacht mit ihrer Walzenoberfläche dargestellte) Presswalzen 2 aufweist. Zwischen den Presswalzen ist ein Walzenspalt angeordnet, wobei die Spaltweite des Walzenspaltes während des Betriebes der Walzenpresse 3 veränderlich ist. Denn eine der Presswalzen ist als Festwalze und die andere Presswalze als Loswalze ausgebildet, wobei die Loswalze über Krafterzeugungsmittel, z.B. hydraulisch gegen die Festwalze anstellbar ist, sodass sich die Spaltweite während des Betriebes in gewissen Grenzen ändert.

Das zu verarbeitende Material wird von oben z.B. über einen Aufgabeschacht zugeführt und durch die gegenläufige Rotation der Presswalzen 2 in die Druckzone eingezogen. Dort kann das Material unter Einwirkung des bestehenden Drucks - je nach Anwendungsfall und Ausgestaltung - zerkleinert, brikettiert oder kompaktiert werden.

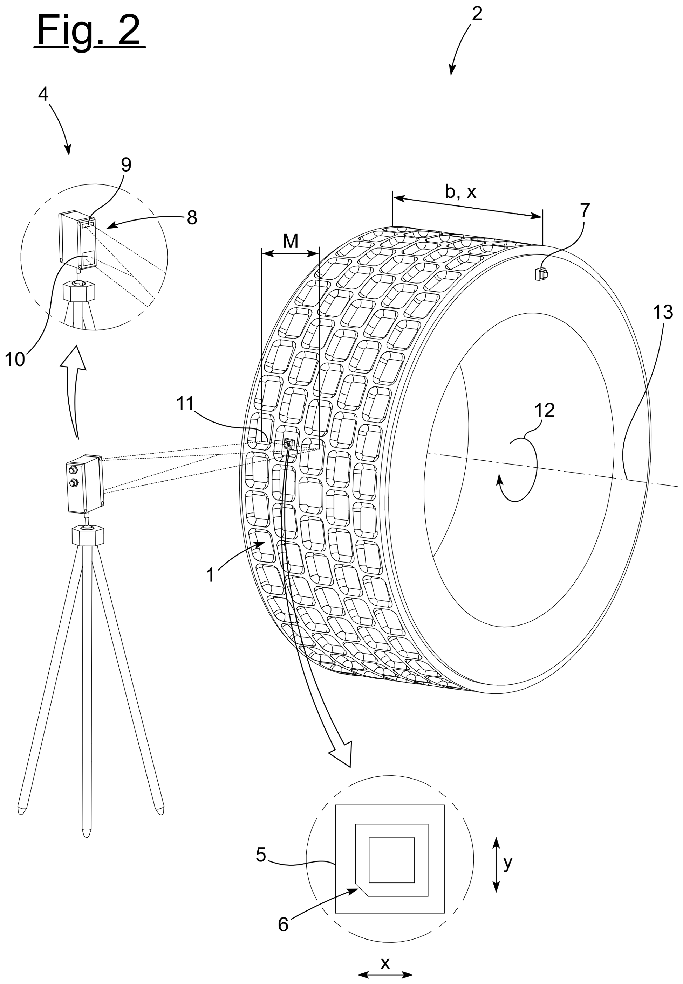

Fig. 2 zeigt (vereinfacht) eine der Presswalzen 2 der Walzenpresse 3, wobei die dreidimensionale Oberflächenstruktur 1 der Walzenoberfläche zu erkennen ist. Sofern die Walze als Brikettier- oder Kompaktierwalze ausgestaltet ist, weist diese eine muldenförmige Oberflächenstruktur auf, wie dies in der Fig. 2 vereinfacht dargestellt ist. Bei der Ausgestaltung der Walze als Zerkleinerungswalze einer Gutbettwalzenmühle kann die Walze mit stiftförmigen oder plattenförmigen Verschleißschutzelementen ausgestaltet sein. Eine solche Verschleißschutzschicht ist in den Figuren nicht dargestellt. Dennoch umfasst die Erfindung auch diese Ausgestaltung der Oberfläche einer Walze. Dabei kann die dreidimensionale Oberflächenstruktur der Walze sowohl regelmäßig als auch unregelmäßig ausgebildet sein.

Die dreidimensionale Oberflächenstruktur 1 der Walze 2 erstreckt sich über die gesamte Arbeitsbreite b der Walze 2, die jedoch geringer als die Gesamtbreite der Walze sein kann. Die Oberflächenstruktur 1, welche auch den Verscheißbereich bildet, wird von der Überwachungseinrichtung 4 erfasst. Diese Überwachungseinrichtung 4 weist eine elektromagnetische Strahlungsquelle 9, z.B. einen Laser auf, der einen Strahl 8 auf die Oberfläche projiziert, der von der Oberflächenstruktur 1 reflektiert und von einem Empfänger 10 z.B. in der Überwachungseinrichtung 4 aufgenommen wird. Dies ist in Fig. 2 schematisch dargestellt. Durch Triangulation wird der Abstand der Messeinrichtung zu der Oberfläche bestimmt, so dass durch Messungen unter Rotation 12 der Walze 2 über den Umfang und die Walzenbreite bzw. Arbeitsbreite die dreidimensionale Oberflächensstrukter 2 der Walze 1 erfasst wird. Dabei kann es sich bei der in Figur 2 dargestellten Presswalze 1 um die in Figur 1 links dargestellte Walze handeln, wobei in den Figuren nicht die vollständigen Walzen, sondern vor allem die Walzenoberflächen bzw. eine Ringbandage einer Presswalze mit der Walzenoberfläche dargestellt sind. Sofern die Analyse der Walzenoberfläche im montierten Zustand der Presswalze innerhalb der Presse erfolgt, ist es zweckmäßig, die Messung auf der dem Walzenspalt gegenüberliegenden "Rückseite" der Walze bzw. Walzenoberfläche durchzuführen, so wie es in Figur 2 angedeutet ist.

In dem dargestellten Ausführungsbeispiel projiziert die Quelle 9, z.B. der Laser 8 der Überwachungseinrichtung 4 eine streifenförmige Linie, z.B. Laserlinie, mit einem sich entlang der Breite der Walze (d. h. achsparallel) erstreckenden Messbereich M bzw. einer Messbreite M auf die Oberfläche der Walze.

Diese Messbreite M ist im Ausführungsbeispiel geringer als die Arbeitsbreite b der Walze. Bevorzugt ist die Messvorrichtung als Linienscanner ausgebildet, sodass über die Linie ein (zunächst zweidimensionales) Höhenprofil erfasst wird. Durch die Rotation 12 der Walze 1 und folglich durch Bewegung der Walzenoberfläche relativ zu der Messeinrichtung wird gleichsam aus einer Aneinanderreihung der einzeln erfassten linienförmigen Höhenprofile die vollständige dreidimensionale Struktur abgebildet.

Auf der Oberfläche der Walze und somit innerhalb der dreidimensionalen Oberflächenstruktur 1 der Walze 2 ist ein dreidimensionales Referenzmittel 5 angebracht. Dieses Referenzmittel 5 ist in einer vergrößerten Darstellung in einer Draufsicht beispielhaft zu sehen. Zu erkennen ist die stufenförmige Geometrie sowie ein asymmetrischer Eckbereich 6, der der Erkennung der Umlaufrichtung der Walze 2 dient. Das Referenzmittel 5 wird von der Überwachungsvorrichtung 4 während der Abstandsmessungen ebenfalls erfasst, da es innerhalb des Messbereiches M positioniert ist. Damit wird eine einwandfreie Skalierung der Daten unabhängig von der Positionierung der Überwachungseinrichtung und zusätzlich eine einfache und zuverlässige Analyse über eine Arbeitsbreite b ermöglicht, die größer als die Messbreite M der Messeinrichtung ist. Denn das Referenzmittel 5 ist in einem Überlappungsbereich von zwei aufeinander folgenden Breitenbereichen durchgeführten Messungen an der Walzenoberfläche befestigt. Da die Arbeitsbreite b der Walze 2 größer als die Messbreite M der Überwachungsvorrichtung 4 ist, müssen über die Arbeitsbreite b nacheinander mehrere Abstandsmessungen durchgeführt werden, die dann in der Auswertung als dreidimensionale Aufnahme der vollständigen Walzenoberfläche in ein Bild bzw. einen Datensatz zusammengeführt werden, um die gesamte Walzenoberfläche darzustellen. Dabei werden mehrere Messungen überlappend durchgeführt. Ein dreidimensionales Referenzmittel 5 befindet sich jeweils in den Überlappungsbereichen und wird ebenfalls von der Überwachungseinrichtung 4 bei der Durchführung der Abstandsmessung erfasst.

Im Rahmen der Erfindung ist folglich von Bedeutung, dass die Geometrie des Referenzmittels 5 in der X-Richtung, Y-Richtung und Z-Richtung jeweils bekannt und in der Überwachungseinrichtung als Referenzdatensatz gespeichert ist. Die X-Richtung bezieht sich dabei auf die Richtung entlang der Walzenbreite parallel zur Walzenachse, die Y-Richtung ist die Richtung entlang des Walzenumfangs bzw. die tangentiale Richtung und die Z-Richtung ist die Höhenrichtung, die folglich in radialer Richtung verläuft. Während der Vermessung der Walzenoberfläche wird folglich mit der Überwachungseinrichtung nicht nur die dreidimensionale Struktur der Walzenoberfläche, sondern insbesondere auch das Referenzmittel 5 vermessen und z.B. anhand seiner spezifischen Asymmetrie erfasst. Durch die Vermessung des Referenzmittels 5 wird ein sogenannter Skalierungsdatensatz erzeugt, der - bezogen auf den zuvor gespeicherten Referenzdatensatz - je nach Positionierung der Überwachungseinrichtung 4 relativ zu der Walzenoberfläche variiert. Diese Erfassung des Skalierungsdatensatzes, der auch als Normierungsdatensatz bezeichnet werden kann, ermöglicht es bei der Auswertung, die gegebenenfalls variierende Positionierung der Messeinrichtung relativ zu der Oberfläche der Walze 2 zu kompensieren. So lassen sich insbesondere nacheinander durchgeführte Messungen unabhängig von der Positionierung der Überwachungseinrichtung 4 normieren. Es kommt folglich nicht darauf an, dass bei nacheinander durchgeführten Messungen der Abstand und oder der Winkel der Überwachungseinrichtung 4 bzw. des Sensors relativ zu der Walze 2 identisch ist. Durch Kenntnis der Geometrie des Referenzmittels 5 in jedem Bilddatensatz lassen sich alle Winkel- und Größenverzerrungen durch unterschiedliche Ausrichtungen oder Abstände der Messeinrichtung 4 zu der Walze herausrechnen, sodass ein maß- und winkeltreues Abbild der gesamten Walzenoberfläche entsteht.

Mit den beschriebenen Messungen unter Berücksichtigung des im Verschleißbereich angeordneten Referenzmittels 5 lassen sich ebene maß- und winkelgerechte Abbilder der Walzenoberflächen in X-, Y-und Z-Richtung erzeugen. Aus den Höhenunterschieden in der Z-Richtung kann der Verschleiß in der Z-Richtung ermittelt werden, und zwar relativ zu Bildpunkten oder Bereichen derselben Oberfläche. Um jedoch auch den absoluten Verschleiß der Walzenoberfläche analysieren zu können, wird in einer besonders bevorzugten Ausführungsform zusätzlich eine Referenzeinrichtung 7 vorgesehen, die außerhalb des Verschleißbereichs angeordnet ist. Dabei ist es zweckmäßig, den absoluten Verschleiß der Walzenoberfläche relativ zu der Walzenachse anzugeben, d. h. den Abstand der jeweiligen Bildpunkte des 3D-Bilddatensatzes zu der Walzenachse 13. Um diesen Abstands-Datensatz als Verschleißvektorfeld bestimmen zu können, wird die zusätzliche Referenzeinrichtung 7 außerhalb des Verschleißbereichs der Walze 2 angeordnet, wobei deren Lage, insbesondere ihr Abstand in Z-Richtung, zu der jeweiligen Walzenachse bekannt ist. Unter Berücksichtigung der zusätzlichen Vermessung dieser Referenzeinrichtung 7 lassen sich bei der Auswertung sämtliche Datensätze auf die Walzenachse 13 beziehen und so der absolute Abstand aller Oberflächenpunkte zur Walzenachse 13 bestimmen. Damit wird auch der absolute Verschleiß, d. h. die Durchmesserabnahme eines jeden Punktes auf der Walzenoberfläche bestimmbar.

In Fig. 2 ist die zusätzliche Referenzeinrichtung 7 angedeutet. Diese ist in der vorliegenden Darstellung an der Stirnseite bzw. Flanke der Walze 2 angeordnet. Sie kann jedoch auch in einem Randbereich auf dem Walzenumfang vorgesehen sein. Grundsätzlich möglich ist - zumindest bei der Festwalze - auch eine Anordnung an einer geeigneten Position an dem Pressengestell. Die Anordnung an der Walze selbst ist jedoch vor allem bei der Loswalze der Presse vorteilhaft, da in diesem Fall die Lage der Loswalze und damit auch der Walzenachse relativ zu dem Pressengestell variiert.

Die Referenzeinrichtung 7 dient folglich in der beschriebenen Weise der Durchführung von Absolutmessungen der Oberflächenstruktur 1 und ist daher in jedem Fall außerhalb des Verschleißbereiches und folglich des Arbeitsbereichs der Walze 2 angeordnet. Die Referenzeinrichtung 7 wird dabei von derselben Überwachungseinrichtung bzw. von derselben Sensoreinrichtung erfasst wie das oder die Referenzmittel 5, d. h. mit derselben Einrichtung vermessen.

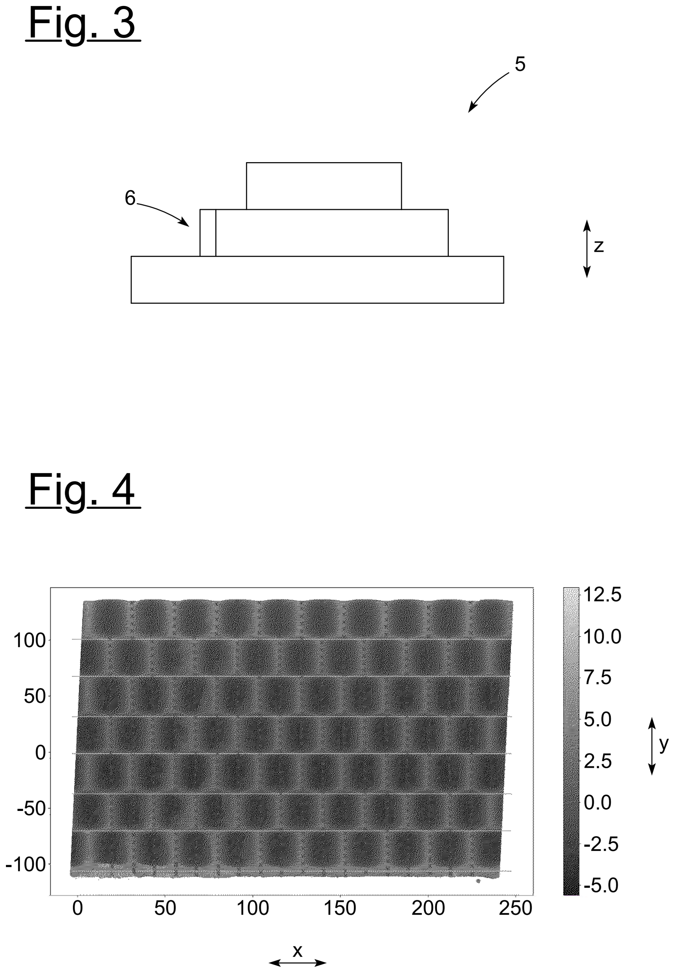

In der Fig. 3 ist schematisch eine mögliche Ausgestaltungsform eines dreidimensionalen Referenzmittels 5 im Querschnitt dargestellt. Dabei ist das Referenzmittel 5 als stufenförmige Pyramide ausgebildet. Diese Pyramide verfügt über mehrere Stufen. Diese besitzen in dem vorliegenden Beispiel die gleiche Höhe, können aber auch unterschiedliche Höhen aufweisen. Die Breite der einzelnen Stufen kann variieren, sie nimmt z.B. von unten nach oben (zur Spitze des Referenzmittels 5) ab. Eine der Stufen weist einen geometrisch abweichenden Umriss 6 auf, so dass seine Identifizierung oder Unterscheidung von weiteren Referenzmitteln 5 und/oder die Orientierung dieses Referenzmittels 5 relativ zu der Walze 2 eindeutig festgestellt werden kann.

Schließlich zeigt die Fig. 4 beispielhaft eine dreidimensionale Darstellung der mit dem erfindungsgemäßen Verfahren ermittelten Oberflächenstruktur 1 einer Walze 2. Diese Darstellung entspricht der Aufnahme, die aus den von der Überwachungseinrichtung 4 gewonnenen Daten (aus den jeweiligen Abstandsmessungen) mit einer Auswerteeinheit und der beschriebenen Skalierung/Normierung erzeugt wird. Die unterschiedlichen Graustufen sind jeweils unterschiedlichen Höhen / Tiefen des Profils zugeordnet. In der Fig. 4 ist die Darstellung der verschiedenen Brikettmulden einer Brikettierwalze zu sehen. Die Graustufen repräsentieren folglich die Z-Richtung. Je dunkler der Bereich dargestellt ist, desto tiefer ist die Struktur, d. h. desto größer ist der Abstand zu der Messeinrichtung. In Fig. 4 erkennt man die dunkleren und tieferen Mulden sowie die helleren und somit nach oben hervorstehenden Stege, die die einzelnen Mulden begrenzen und somit die Briketts formen. Sofern zusätzlich eine Referenzeinrichtung 7 bei der Durchführung der Messungen eingesetzt wird, können aus dieser Darstellung, bzw. den der Darstellung zugrundeliegenden Messdaten, Absolutwerte für das Profil der Oberfläche ermittelt werden.

## Patentansprüche

1. Verfahren zur Überwachung einer dreidimensionalen Struktur einer Oberfläche (1) einer Walze (2) für eine Walzenpresse (3) zum Zerkleinern, Brikettieren oder Kompaktieren, mit einer Überwachungseinrichtung (4), die die Oberflächenstruktur (1) der Walze (2) durch Abstandsmessungen als zumindest einen 3D-Bilddatentsatz bestimmt,
**dadurch gekennzeichnet,**
**dass** während der Abstandsmessungen mindestens ein dreidimensionales Referenzmittel (5) innerhalb der Arbeitsbreite (b) der Walze (2) auf der Oberfläche der Walze angebracht ist.

2. Verfahren nach Anspruch 1, **dadurch gekennzeichnet,**
**dass** die dreidimensionale Geometrie des zumindest einen Referenzmittels als Referenzdatensatz gespeichert ist,
**dass** bei der Vermessung der Walzenoberfläche Abstandsmessungen an dem Referenzmittel durchgeführt und daraus ein Skalierungsmessdatensatz erzeugt werden und
**dass** der die Oberflächenstruktur der Walze repräsentierenden 3D-Bilddatensatz unter Berücksichtigung des gespeicherten Referenzdatensatzes und des Skalierungsmessdatensatzes skaliert wird.

3. Verfahren nach Anspruch 1 oder 2, **dadurch gekennzeichnet, dass** das mindestens eine Referenzmittel (5) lösbar auf der Walze (2) angebracht wird, z.B. adhäsiv oder magnetisch.

4. Verfahren nach einem der Ansprüche 1 bis 3, **dadurch gekennzeichnet, dass** das Verfahren außerhalb bzw. während einer Unterbrechung des Produktionsbetriebes der Walzenpresse (3) durchgeführt wird, bevorzugt in einem in der Walzenpresse (3) eingebauten Zustand der Walze (2).

5. Verfahren nach einem der Ansprüche 1 bis 4, **dadurch gekennzeichnet, dass** die Walze (2) während der Überwachung der dreidimensionalen Oberflächenstruktur (1) rotiert, bevorzugt mit gleichbleibender Geschwindigkeit.

6. Verfahren nach einem der Ansprüche 1 bis 5, **dadurch gekennzeichnet, dass** der 3D-Bilddatensatz durch die Abstandsmessungen über den Umfang und zumindest über einen Teil der Arbeitsbreite (b) der Walze (2) erzeugt wird.

7. Verfahren nach einem der Ansprüche 1 bis 6, **dadurch gekennzeichnet, dass** die Überwachungseinrichtung zumindest eine Sensoreinrichtung aufweist, wobei die Sensoreinrichtung eine Quelle aufweist, die zumindest einen Messstrahl erzeugt und wobei die Sensoreinrichtung zumindest einen Detektor bzw. Empfänger aufweist, der den von der Quelle erzeugten und von der Oberfläche der Walze reflektierten Messstrahl detektiert.

8. Verfahren nach Anspruch 7, **dadurch gekennzeichnet, dass** der Messstrahl ein elektromagnetischer Strahl, z.B. ein Lichtstrahl, vorzugsweise ein Laserstrahl ist.

9. Verfahren nach Anspruch 7 oder 8, **dadurch gekennzeichnet, dass** die Quelle den Messstrahl als sich entlang der Walzenbreite orientierte Messlinie, z.B. als Licht- oder Laserlinie, auf die Walzenoberfläche projiziert, wobei die sich entlang der Walzenbreite erstreckende Länge der Messlinie die Messbreite (M) der Sensoreinrichtung bzw. Überwachungseinrichtung definiert.

10. Verfahren nach einem der Ansprüche 1 bis 9, **dadurch gekennzeichnet, dass** die Abstandsmessungen mittels Triangulation durchgeführt werden, bevorzugt mittels Lasertriangulation.

11. Verfahren nach einem der Ansprüche 1 bis 10, **dadurch gekennzeichnet, dass** die Überwachungseinrichtung (4) eine Messbreite (M) aufweist, die geringer als die Arbeitsbreite (b) der Walze (2) ist, wobei zur Erfassung der gesamten Arbeitsbreite (b) der Walze (2) (nacheinander) mehrere Abstandsmessungen über die Arbeitsbreite (b) der Walze (2) durchgeführt und damit mehrere 3D-Bilddatensätze erzeugt werden,
wobei sich die mehreren Abstandsmessungen in zumindest einem Überlappungsbereich überlappen, in welchem das mindestens eine Referenzmittel (5) angeordnet ist,
wobei die mehreren über die Arbeitsbreite erzeugten 3D-Bilddatensätze unter Berücksichtigung des zu dem Referenzmittel (5) jeweils gespeicherten Referenzdatensatzes und des an dem Referenzmittel jeweils aufgenommenen Skalierungsdatensatzes kombiniert und identisch skaliert werden.

12. Verfahren nach einem der Ansprüche 1 bis 11, **dadurch gekennzeichnet, dass** die Überwachungseinrichtung (4) während der Überwachung der dreidimensionalen Oberflächenstruktur (1), insbesondere während der Messung über eine Messbreite (M) stationär, d.h. ortsfest montiert ist.

13. Verfahren nach einem der Ansprüche 1 bis 12, **dadurch gekennzeichnet, dass** die Überwachungseinrichtung, z.B. deren Sensoreinrichtung für die Vermessung einer Arbeitsbreite (b), die größer als die Messbreite (M) ist, nacheinander in unterschiedlichen Positionen relativ zu der Walze positioniert wird.

14. Verfahren nach einem der Ansprüche 1 bis 13, **dadurch gekennzeichnet, dass** das mindestens eine dreidimensionale Referenzmittel (5) im Querschnitt als stufenförmiges Referenzmittel (5) ausgebildet ist, z.B. als stufenförmige Pyramide.

15. Verfahren nach einem der Ansprüche 1 bis 14, **dadurch gekennzeichnet, dass** das mindestens eine dreidimensionale Referenzmittel (5) in einer Draufsicht asymmetrisch (6) ausgebildet ist, z.B. mit einem asymmetrisch ausgebildeten Eckbereich (6).

16. Verfahren nach einem der Ansprüche 1 bis 15, **dadurch gekennzeichnet, dass** mehrere dreidimensionale Referenzmittel (5), die sich bevorzugt in ihrer Geometrie unterscheiden, mit einem Abstand zueinander auf der Oberfläche der Walze (2) über ihre Arbeitsbreite (b) verteilt angeordnet werden.

17. Verfahren nach einem der Ansprüche 1 bis 16, **dadurch gekennzeichnet, dass** zur absoluten Vermessung der Oberfläche, z.B. der absoluten Bestimmung des Verschleißes, zusätzlich mindestens eine Referenzeinrichtung (7) außerhalb der Arbeitsbreite (b) der Walze (2) vorgesehen ist, die vorzugsweise in einem definierten Abstand zur Walzenachse (13) positioniert ist, z.B. in einem Randbereich auf dem Walzenumfang, an der Walzenstirnseite oder an dem Pressengestell angeordnet ist.

18. Vorrichtung zur Überwachung einer dreidimensionalen Struktur einer Oberfläche (1) einer Walze (2) für eine Walzenpresse (3) zum Zerkleinern, Brikettieren oder Kompaktieren von Material, zur Durchführung eines Verfahrens nach einem der Ansprüche 1 bis 17 mit einer Überwachungseinrichtung (4) und mindestens einem dreidimensionalen Referenzmittel (5), wobei das mindestens eine Referenzmittel (5) innerhalb der Arbeitsbreite (b) der Walze (2) auf der Oberfläche der Walze (2) befestigbar ist.

19. Vorrichtung nach Anspruch 18, **dadurch gekennzeichnet, dass** die Überwachungseinrichtung (4) zumindest eine Sensoreinrichtung aufweist, wobei die Sensoreinrichtung eine Quelle aufweist, mit welcher ein Messtrahl erzeugbar ist und wobei die Sensoreinrichtung einen Detektor bzw. Empfänger aufweist, mit dem der von der Quelle erzeugte und von der Oberfläche der Walze reflektierte Messstrahl detektierbar ist.

20. Vorrichtung nach einem der Ansprüche 18 oder 19, **dadurch gekennzeichnet, dass** die Überwachungsvorrichtung (4) oder deren Sensoreinrichtung mobil bzw. transportabel ausgestaltet ist.

21. Vorrichtung nach einem der Ansprüche 18 bis 20 mit einer Auswerteeinheit, die als interne Auswerteeinheit in die Überwachungseinrichtung integriert ist oder als externe Auswerteeinheit mit der Überwachungseinrichtung verbunden ist und/oder mit dieser kommuniziert, wobei der Referenzdatensatz zur Skalierung des 3D-Bilddatensatzes bevorzugt in der internen Auswerteeinheit oder der externen Auswerteeinheit gespeichert ist.

22. Vorrichtung nach einem der Ansprüche 18 bis 21, **dadurch gekennzeichnet, dass** die Quelle elektromagnetische Strahlung erzeugt, z.B. als Lichtquelle, vorzugsweise als Laser ausgebildet ist und/oder
dass die Sensoreinrichtung als Linienscanner ausgebildet ist, wobei mit der Quelle eine sich entlang der Walzenbreite erstreckende Messlinie auf die Walzenoberfläche projiziert wird.

23. Walzenpressenanlage mit einer Walzenpresse (3) mit zwei in einem Pressengestell drehbar gelagerten Walzen (2), zwischen denen ein Walzenspalt gebildet ist und mit einer Vorrichtung zur Überwachung nach einem der Ansprüche 18 bis 22, insbesondere zur Überwachung der dreidimensionalen Struktur der Oberfläche (1) der Walze (2) nach einem Verfahren nach einem der Ansprüche 1 bis 16, wobei das mindestens eine Referenzmittel (5) innerhalb der Arbeitsbreite (b) einer der Walzen (2) auf der Oberfläche dieser Walze (2) anbringbar ist.

24. Walzenpressenanlage nach Anspruch 23, **dadurch gekennzeichnet, dass** die Walze (2) eine regelmäßige Oberflächenstruktur über die Breite und/oder den Umfang aufweist.

25. Walzenpressenanlage nach Anspruch 23 oder 24, **dadurch gekennzeichnet, dass** die Walze (2) als eine Brikettier- oder Kompaktierwalze mit einer muldenförmigen Oberflächenstruktur oder als eine Zerkleinerungswalze mit stiftförmigen oder plattenförmigen Verschleißschutzelementen ausgestaltet ist.

26. Presswalze, insbesondere für eine Walzenpressenanlage nach einem der Ansprüche 23 bis 25, **dadurch gekennzeichnet, dass** mindestens ein dreidimensionales Referenzmittel der beschriebenen Art innerhalb der Arbeitsbreite der Walze (2) auf der Oberfläche der Walze (2) anbringbar oder angebracht ist.
